# FASCICULE DE BREVET EUROPEEN

(11) **EP 3 734 392 B1**
(45) Date de publication et mention de la délivrance du brevet: **13.12.2023**
(21) Numéro de dépôt: 20172093.5
(22) Date de dépôt: 29.04.2020
(51) Int. Cl.: G05D 1/02

(54) **PROCÉDÉS DE GUIDAGE D'UN VÉHICULE AUTONOME**
VERFAHREN ZUM FÜHREN EINES AUTONOMEN FAHRZEUGS
METHODS FOR GUIDING AN AUTONOMOUS VEHICLE

(30) Priorité: 30.04.2019 FR 1904540
(43) Date de publication de la demande: 04.11.2020
(73) Titulaire: Arquus, 78000 Versailles (FR)
(72) Inventeur: VIELLARD, Jérôme, 75015 Paris (FR)
(74) Mandataire: Lavoix

(56) Documents cités:
- US-A1- 2013 030 606

## Description

La présente invention se rapporte à des procédés de guidage d'un véhicule autonome, et notamment au guidage d'un convoi autonome de véhicules terrestres, c'est-à-dire d'un ensemble de véhicules autonomes qui suivent un véhicule guide sans intervention directe d'un conducteur humain.

Dans le domaine de la logistique, notamment dans un contexte militaire, il est fréquent d'avoir recours à des véhicules automobiles terrestres circulant en convoi pour transporter du matériel sur un théâtre des opérations.

Cela a toutefois pour inconvénient de mobiliser de nombreux opérateurs pour conduire les véhicules. Ces opérateurs ne peuvent pas défendre le convoi pendant qu'ils sont occupés à conduire, ce qui pose un problème lorsque le convoi est exposé à des menaces provenant d'un ennemi. L'automatisation des fonctions de conduite pour au moins une partie des véhicules du convoi est donc souhaitable.

Cependant, les systèmes de pilotage automatique contemporains conçus pour les véhicules autonomes ne sont pas satisfaisants, car ils nécessitent d'avoir recours à des technologies de positionnement qui ne sont pas toujours utilisables sur le terrain, notamment dans un contexte militaire, telles celles basées sur des systèmes de guidage par satellite, ou sur des cartographies numériques détaillées du terrain, ou sur des marqueurs physiques pré-positionnés sur le terrain.

En effet, des signaux de guidage par satellite peuvent être brouillés par un ennemi, ou peuvent être localement indisponibles, par exemple à cause du relief.

Par ailleurs, il est difficile d'obtenir et de tenir à jour une cartographie numérique fiable et détaillée du terrain lorsque l'on se trouve en dehors des routes régulières ou dans des territoires reculés, notamment dans des régions soumises à des contraintes climatiques et géographiques extrêmes, comme les déserts, les jungles ou les montagnes.

Ces cartographies peuvent être mal renseignées, voire obsolètes ou incomplètes, voire même inexistantes, et certaines routes ou pistes peuvent ne pas y être répertoriées. Ces cartographies peuvent notamment manquer de fiabilité et de précision à cause d'aléas climatiques ou environnementaux qui altèrent le terrain au cours du temps, comme lorsqu'une piste routière est inopinément bloquée ou détruite par un éboulement ou par une inondation.

Enfin, les marqueurs pré-positionnés, tels que des marquages au sol ou des balises radio, nécessitent d'être placés à des positions spécifiques avant le passage du convoi, ce qu'il est souvent impossible de faire dans des environnements hostiles tels que ceux décrits ci-dessus, de surcroît lorsqu'on ne sait pas à l'avance où devra passer le convoi. De plus, les marqueurs pourraient être sabotés par un ennemi avant le passage du convoi.

Le document US 2013/030606 A1 décrit un procédé de guidage de véhicules, qui cependant ne résoud pas de façon satisfaisante les problèmes précités.

Il existe donc un besoin pour un procédé de guidage d'un véhicule autonome, notamment au sein d'un convoi de véhicules, qui remédie aux inconvénients précités.

A cet effet, un aspect de l'invention concerne un procédé de guidage d'un véhicule autonome conforme à la revendication 1.

Grâce à l'invention, la trajectoire cible que doit suivre le véhicule autonome est calculée en fonction des données de trajectoire du véhicule guide et de la connaissance de la position relative d'au moins une partie des autres véhicules autonomes du convoi. Cela réduit le risque d'erreur de trajectoire du véhicule autonome.

Les véhicules du convoi peuvent donc suivre le véhicule guide de façon autonome, en conservant leur position au sein du convoi, sans nécessiter de supervision constante d'un opérateur de conduite.

Des aspects avantageux mais non obligatoires du procédé conforme à l'invention sont spécifiés aux revendications 2 à 4.

Selon un autre aspect, l'invention concerne un procédé de guidage d'un convoi de véhicules conforme à la revendication 5.

Selon un autre aspect, l'invention concerne un véhicule autonome conforme à la revendication 6.

Selon encore un autre aspect, l'invention concerne un convoi de véhicules comportant un véhicule guide et une pluralité de véhicules autonomes programmés pour suivre le véhicule guide, dans lequel le véhicule guide est programmé pour mettre en oeuvre des étapes consistant à :
- calculer une valeur courante de sa trajectoire en fonction de valeurs passées de sa trajectoire et de données d'odométrie mesurées par un deuxième ensemble de capteurs du véhicule guide ;
- envoyer la valeur courante calculée de sa trajectoire à destination des véhicules autonomes du convoi, par l'intermédiaire d'une liaison de communication ;
et dans lequel chacun des véhicules autonomes est tel que décrit précédemment.

L'invention sera mieux comprise et d'autres avantages de celle-ci apparaîtront plus clairement à la lumière de la description qui va suivre, d'un mode de réalisation d'un procédé de guidage donnée uniquement à titre d'exemple et faite en référence aux dessins annexés, dans lesquels :
[Fig 1] la figure 1 représente schématiquement un convoi de véhicules comportant un véhicule guide et une pluralité de véhicules suiveurs autonomes selon des modes de réalisation de l'invention ;
[Fig 2] la figure 2 représente schématiquement un véhicule du convoi de la figure 1 ;
[Fig 3] la figure 3 est un diagramme de flux d'un procédé de guidage conforme à des modes de réalisation de l'invention.

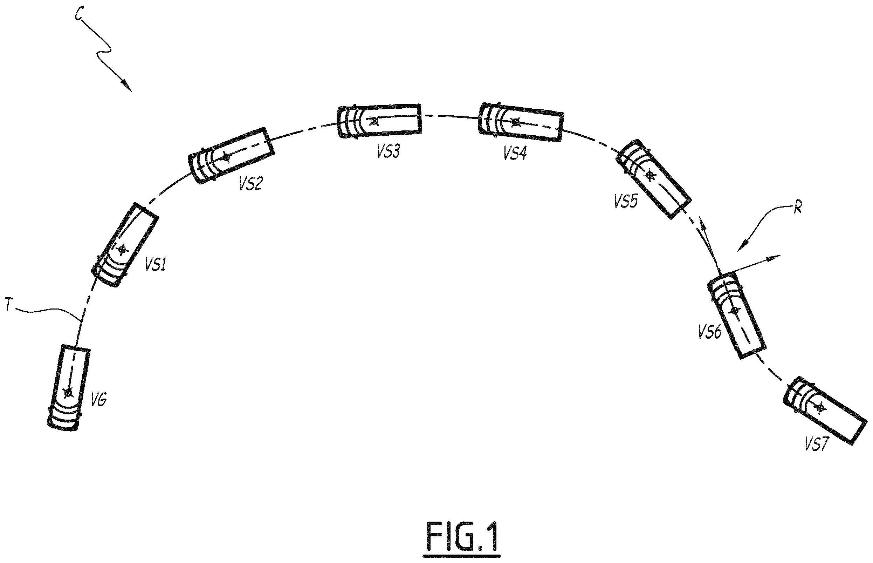

Sur la figure 1 est représenté un convoi C de véhicules comportant un véhicule guide VG, ici placé en tête du convoi C, et une pluralité de véhicules suiveurs, ici au nombre de sept et notés VS1, VS2, VS3, VS4, VS5, VS6 et VS7, qui suivent le véhicule guide VG les uns derrières les autres.

En variante, le nombre de véhicules du convoi C peut être différent. Par exemple, le nombre de véhicules suiveurs VS est supérieur ou égal à deux ou à quatre.

Dans l'exemple illustré, le premier véhicule suiveur VS1 est immédiatement derrière le véhicule guide VG, le deuxième véhicule suiveur VS2 est immédiatement derrière le premier véhicule suiveur VS1 et ainsi de suite jusqu'au dernier véhicule suiveur VS7 qui est ici en queue du convoi C.

Dans cet exemple, les véhicules du convoi C sont des véhicules automobiles, tels que des camions ou des véhicules militaires, de préférence des véhicules tout terrain, par exemple utilisés à des fins de transport, notamment pour transporter du matériel, ou des vivres, ou du personnel, ou des véhicules, ou du carburant.

Les véhicules du convoi peuvent être des véhicules à roues, par exemple à quatre roues ou à six roues ou plus, ou peuvent être des véhicules chenillés.

Les modes de réalisation sont ici décrits à titre d'exemple en référence à une utilisation dans un contexte militaire, mais de nombreuses autres applications sont possibles, telles que l'exploitation forestière, ou le transport de matériaux dans un site d'extraction, notamment une mine, ou une carrière, ou un champ pétrolier, ou la construction d'infrastructures, ou la lutte contre les incendies, ou l'organisation de convois exceptionnels transportant des charges de grande taille, et bien d'autres exemples encore.

Selon des exemples, le convoi C circule sur une route pavée, ou sur une route non pavée, ou sur une piste, ou sur un terrain dépourvu de route.

Dans l'exemple illustré, la référence R désigne un repère de coordonnées associé à l'un des véhicules suiveurs, en l'occurrence ici au véhicule suiveur VS6. Des repères similaires peuvent également être définis pour chacun des véhicules VG et du convoi.

Par exemple, le repère R est un repère cartésien à deux dimensions, dont le centre est choisi sur le point milieu de l'essieu arrière du véhicule VS6. Un premier axe du repère R est aligné avec la direction longitudinale du véhicule VS6 et un deuxième axe s'étend perpendiculairement au premier axe. Par exemple, les premier et deuxième axes sont orientés horizontalement lorsque le véhicule VS6 roule sur un terrain plat. Le repère R est solidaire du véhicule VS6.

La référence T désigne ici une trajectoire suivie par le véhicule guide VG.

Selon des modes de réalisation, les véhicules suiveurs VS1 à VS7 sont des véhicules autonomes programmés pour suivre le véhicule guide VG tout en restant dans le convoi C. Ainsi, dans ce qui suit, les termes « véhicule suiveur » et « véhicule autonome » peuvent être utilisés de façon interchangeable.

Par « véhicule autonome », on désigne ici un véhicule automobile à pilotage automatique ne nécessitant pas de supervision constante d'un opérateur de conduite humain lors de son déplacement.

De préférence, le véhicule guide VG est destiné à être piloté par un opérateur de conduite humain.

Mais selon des variantes, le véhicule guide VG peut être piloté à distance ou être un véhicule à pilotage automatique capable de se guider lui-même, par exemple grâce à une technologie de guidage dite de niveau 4 (« Level 4 ») ou plus, au sens de la classification définie par le standard SAE-J3016 publié par l'organisation SAE INTERNATIONAL.

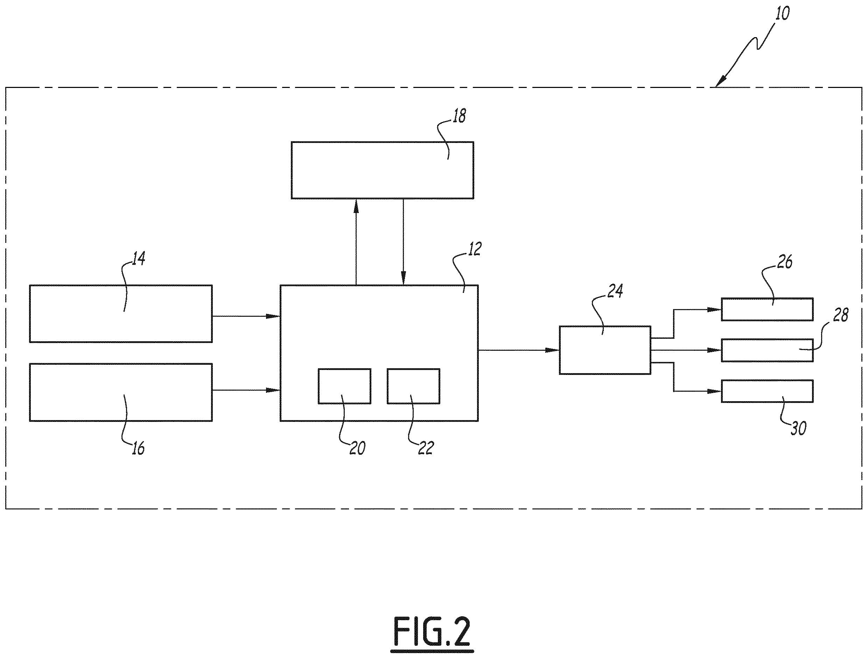

Comme illustré sur la figure 2, selon des modes de réalisation, chaque véhicule suiveur VS1 à VS7, référencé de façon générique par la référence 10 dans ce qui suit, comporte une unité électronique de traitement 12, un premier ensemble de capteurs 14, un deuxième ensemble de capteurs 16 et une interface de communication 18, connectés entre eux par une liaison de communication interne au véhicule 10.

L'unité électronique de traitement 12 comporte une unité logique de calcul 20, par exemple incluant un ou plusieurs microprocesseurs ou microcontrôleurs, ainsi qu'une mémoire informatique 22 formant un support d'enregistrement de données lisible par ordinateur et comportant des instructions exécutables et/ou un code logiciel pour mettre en oeuvre automatiquement un ou plusieurs procédés de fonctionnement tels que décrits ci-après.

En particulier, dans des modes de réalisation, l'unité électronique de traitement 12 est programmée pour piloter automatiquement le véhicule 10, notamment en fonction de données reçues ou mesurées, de manière à ce que le véhicule 10 suive automatiquement le véhicule guide VG tout en restant dans le convoi C, comme expliqué ci-après.

En variante, l'unité électronique de traitement 12 peut comporter un composant logique programmable de type FPGA (Field-Programmable Gate Array) ou un circuit intégré dédié de type ASIC (Application-Specific Integrated Circuit) configuré pour mettre en oeuvre de tels procédés.

L'interface de communication 18 est adaptée pour communiquer avec des éléments extérieurs au véhicule 10, notamment pour communiquer avec le véhicule guide VG ou avec d'autres véhicules suiveurs 10, au moyen d'une liaison de communication, de préférence par une liaison de communication sans fil, telle qu'une liaison par ondes radiofréquence de courte portée ou de longue portée, ou par micro-ondes, ou une liaison optique, notamment de type Li-Fi (Light-Fidelity). En variante, une liaison filaire, telle qu'un câble ou des fibres optiques, peut être utilisée pour connecter tout ou partie des véhicules entre eux.

Le premier ensemble de capteurs 14 comprend un ou plusieurs capteurs aptes à mesurer des données d'odométrie du véhicule 10. Par exemple, ces capteurs sont connectés à l'unité électronique de traitement 12.

Selon des exemples, les données d'odométrie comportent une ou plusieurs des grandeurs suivantes : la vitesse de déplacement du véhicule 10, l'angle de braquage des roues directrices du véhicule, l'angle du volant ou l'angle de tout organe de commande de direction du véhicule 10.

Par exemple, le premier ensemble de capteurs 14 comporte un ou plusieurs capteurs de vitesse qui mesurent la vitesse de déplacement du véhicule 10 et/ou un ou plusieurs capteurs d'angle par exemple associés aux roues et/ou aux organes de commande de direction du véhicule 10. Le premier ensemble de capteurs 14 peut également comporter une centrale inertielle.

Les données d'odométrie sont préférentiellement mesurées de façon répétée au cours du temps, avec une fréquence d'échantillonnage prédéfinie.

Le premier ensemble de capteurs 14 est toutefois optionnel et peut être omis dans certains modes de réalisation du véhicule 10. Dans ce cas, les données d'odométrie du véhicule 10 ne sont pas mesurées.

Le deuxième ensemble de capteurs 16 comprend un ou plusieurs capteurs adaptés pour mesurer des données de position relative du véhicule 10 par rapport à un ou à plusieurs autres véhicules du convoi C, notamment une ou plusieurs distances séparant le véhicule 10 d'autres véhicules du convoi.

Selon des exemples, les données de position relative, aussi nommées « inter-référence », expriment la position relative du véhicule 10 par rapport à d'autres véhicules du convoi 10, notamment par rapport au véhicule du convoi C qui précède immédiatement le véhicule 10, et/ou également par rapport aux autres véhicules du convoi C précédant le véhicule 10, et/ou également par rapport au véhicule suivant le véhicule 10.

Par exemple, le deuxième ensemble de capteurs 16 comporte un dispositif de télémétrie, notamment de type Lidar, et/ou une caméra optique associée à un circuit électronique ou à un programme de traitement automatique d'images.

Selon des modalités de mise en oeuvre, le véhicule 10 peut en outre comporter un ou plusieurs circuits électroniques de traitement des signaux mesurés par les capteurs 14 et 16, par exemple pour filtrer et/ou mettre en forme et/ou pour échantillonner les signaux mesurés.

Le véhicule 10 comporte également une interface de commande automatique 24 permettant à l'unité électronique de traitement 12 de piloter le véhicule 10.

Selon des modalités d'implémentation, le véhicule 10 comporte un groupe motopropulseur 26, un système de freinage 28 et un système de direction 30 qui permettent de mouvoir et de piloter le véhicule 10 et qui sont commandables au travers de l'interface de commande automatique 24.

Par exemple, des valeurs de consigne, telles que des valeurs de consigne d'accélération, ou de consigne de freinage, ou de consigne d'angle de braquage, sont fournies aux actionneurs pour piloter le véhicule 10.

Les valeurs de consigne peuvent être élaborées directement par l'unité de traitement 12, ou être élaborés par l'interface de commande 24 en fonction de signaux de commande envoyés par l'unité de traitement 12.

De façon optionnelle, le véhicule 10 peut comporter une interface de pilotage manuelle ou semi-automatique permettant à un opérateur de prendre le contrôle du véhicule 10 et/ou de piloter directement le véhicule 10 lorsque le pilotage automatique n'est pas activé ou en cas de défaillance du pilotage automatique.

Cette interface de pilotage peut comporter un poste de conduite pourvu d'un volant, de pédales et/ou de leviers de commande.

Le véhicule guide VG, non illustré en détail, diffère des véhicules suiveurs 10 en ce qu'il est destiné à être piloté par un opérateur et non pas de façon autonome.

Ainsi, selon des modes de réalisation, le véhicule guide VG comporte un groupe motopropulseur, un système de freinage et un système de direction similaires à ceux du véhicule 10 et pilotables par un opérateur de conduite au moyen d'une interface de commande manuelle ou semi-automatique.

Par exemple, l'interface de commande du véhicule guide VG comporte un poste de conduite pourvu d'un volant, de pédales et/ou de leviers de commande.

Le véhicule guide VG comporte également une unité électronique de traitement similaire à l'unité électronique de traitement 12, un premier ensemble de capteurs similaire à l'ensemble 14 et une interface de communication similaire à l'interface 18, connectés entre eux par une liaison de communication interne au véhicule guide VG.

Le premier ensemble de capteurs comprend un ou plusieurs capteurs aptes à mesurer des données d'odométrie du véhicule VG et connectés à l'unité électronique de traitement.

Par exemple, les données d'odométrie comportent une ou plusieurs des grandeurs suivantes : la vitesse de déplacement du véhicule VG, l'angle de braquage des roues directrices du véhicule, l'angle du volant ou l'angle de tout organe de commande de direction du véhicule VG.

Les données d'odométrie du véhicule VG sont préférentiellement mesurées de façon répétée au cours du temps, avec une fréquence d'échantillonnage prédéfinie, qui est préférentiellement la même que celle utilisée pour les véhicules suiveurs 10.

De façon optionnelle, le véhicule guide VG peut comporter un deuxième ensemble de capteurs analogue à l'ensemble 16 précédemment décrit.

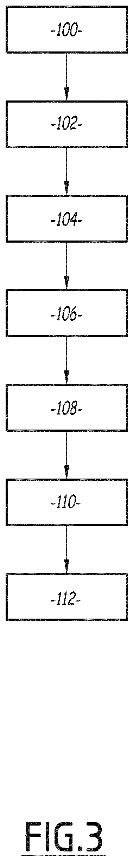

Un exemple de fonctionnement d'un procédé de guidage des véhicules du convoi C est maintenant décrit en référence à la figure 3.

Initialement, le convoi C est formé, par exemple en mettant en mouvement le véhicule guide VG puis en déplaçant les véhicules suiveurs VS1 à VS7, automatiquement ou manuellement, de manière à les aligner derrière le véhicule guide VG.

Ensuite, un procédé de pilotage automatique est mis en oeuvre pour chacun des véhicules suiveurs VS1 à VS7 afin qu'ils se suivent et qu'ils suivent le véhicule guide VG, permettant ainsi de guider le convoi C.

Lors d'une étape 100, le véhicule guide VG calcule automatiquement une valeur courante de sa trajectoire, ici grâce à son unité électronique de traitement, en fonction de valeurs passées de sa trajectoire et de données d'odométrie mesurées par son premier ensemble de capteurs.

Par exemple, les données d'odométrie sont mesurées pendant une fenêtre de temps prédéfinie.

Selon des exemples, l'étape 100 est réitérée régulièrement au cours du temps, par exemple en fonction de la fréquence de mesure des données d'odométrie.

La fréquence de répétition des étapes est par exemple égale à 10Hz.

Lors de chaque itération, la valeur courante de la trajectoire ainsi calculée est stockée en mémoire de l'unité électronique de traitement du véhicule guide VG, pour une utilisation lors d'une itération ultérieure.

Selon des exemples, la trajectoire comporte un ensemble de points géométriques marquant les positions successives du véhicule guide VG au cours de différents instants du temps ou de différents intervalles de temps.

La trajectoire peut donc être exprimée comme un ensemble de points séparés, ou comme une courbe continue passant par ces points ou interpolée à partir de tout ou partie de ces points.

Par exemple, les coordonnées de ces points sont exprimées dans un repère géométrique R tel que précédemment défini ou sont exprimées relativement en fonction de la position de précédents points de la trajectoire.

On comprend ici qu'il est question de trajectoire passée du véhicule, puisque la trajectoire future du véhicule guide VG n'est pas nécessairement connue à l'avance.

Selon des exemples, une valeur initiale de la trajectoire, telle qu'une position initiale, pouvant être prédéfinie et déjà présente en mémoire, est utilisée lors de la première itération de l'étape 100.

Lors d'une étape 102, le véhicule guide VG envoie des données de trajectoire, notamment la valeur courante calculée de sa trajectoire, à destination des véhicules autonomes du convoi, par l'intermédiaire de la liaison de communication.

Selon des variantes, le véhicule VG peut, lors de l'étape 102, envoyer une portion de sa trajectoire et pas seulement la valeur courante de sa trajectoire. Selon encore d'autres variantes, le véhicule guide VG peut envoyer la totalité de sa trajectoire. L'étape 100 est alors adaptée en conséquence.

Lors d'une étape 104, chaque véhicule suiveur VS1 à VS7 acquiert les données de trajectoire envoyées par le véhicule guide VG. Cette acquisition est ici réalisée par chaque véhicule suiveur VS1 à VS7 au moyen de leur interface de communication 18 respective.

L'étape 104 et les étapes suivantes sont décrites en référence à un seul véhicule suiveur, mais on comprend qu'elles peuvent être mises en oeuvre en parallèle par plusieurs véhicules suiveurs, voire de préférence par tous les véhicules suiveurs.

Par exemple, l'étape 104 et les étapes décrites ci-dessus sont répétées régulièrement au cours du temps, par exemple périodiquement, avec la fréquence de répétition prédéfinie.

Lors d'une étape 106, chaque véhicule suiveur VS1 à VS7 mesure, grâce au deuxième ensemble de capteurs 16, des données de position relative par rapport à un ou plusieurs autres véhicules du convoi C.

Par exemple, chaque véhicule suiveur VS1 à VS7 mesure la distance le séparant du véhicule précédent grâce aux capteurs 16.

Avantageusement, lors de l'étape 106, chaque véhicule suiveur VS1 à VS7 peut également mesurer des données d'odométrie s'il est équipé du premier ensemble de capteurs 14.

Selon des modes de réalisation avantageux, lors d'une étape additionnelle non illustrée suivant l'étape 104, chaque véhicule suiveur VS1 à VS7 acquiert les positions instantanées d'au moins une partie des véhicules du convoi, et de préférence de tous les véhicules du convoi.

Par exemple, ces positions sont acquises indirectement en fonction des données de position relative mesurées par ledit véhicule suiveur et des données de trajectoire acquises du véhicule guide VG. En d'autres termes, un calcul automatique peut être nécessaire pour déterminer lesdites positions à partir des données de position relative et/ou de trajectoire acquise.

Selon un autre exemple, les positions sont acquises directement à partir des autres véhicules du convoi C. Par exemple, chaque véhicule suiveur du convoi C envoie automatiquement aux autres véhicules les données de position, par exemple des données de position relative qu'il a précédemment mesurées. Cet envoi est par exemple réalisé au moyen de la liaison de communication.

Selon des variantes, cet envoi peut n'être effectué que par une partie des véhicules suiveurs du convoi C, à destination de tous ou de seulement une partie des véhicules suiveurs du convoi C. De même, en variante, l'acquisition lors de cette étape peut n'être faite que par une partie des véhicules suiveurs VS1 à VS7 du convoi.

A la fin de l'étape additionnelle, chaque véhicule suiveur VS1 à VS7 dispose d'une information sur la position des autres véhicules du convoi.

De préférence, pour chaque véhicule suiveur, les positions des autres véhicules sont exprimées dans le repère R qui est associé audit véhicule suiveur, ce qui facilite le calcul de la trajectoire cible pour ledit véhicule suiveur par la suite.

Optionnellement, lors de l'étape 104, des données de position relatives additionnelles mesurées par d'autres véhicules du convoi C sont également acquises par le véhicule suiveur. Par exemple, ces données sont envoyées par lesdits autres véhicules du convoi C, par exemple par tous les autres véhicules suiveurs.

Ainsi, lors de l'étape additionnelle, l'ensemble des positions instantanées des véhicules du convoi peut alors être déterminé en fonction également des données de position relatives additionnelles acquises lors de ces variantes de l'étape 104.

Selon des modalités d'implémentation, les données relatives à la position des véhicules peuvent être combinées pour représenter l'état d'au moins une partie du convoi C, voire de tout le convoi C.

Par exemple, cet état est mis à jour régulièrement en fonction des données acquises régulièrement au cours de l'exécution du procédé.

Le traitement de ces données pour les combiner et les mettre à jour peut être réalisé au moyen de procédés d'estimation tel que les filtres de Kalman, notamment du type filtre de Kalman étendu.

Ces étapes sont par exemple réalisées au moyen d'un dispositif électronique de calcul, par exemple par l'unité de traitement 12.

Selon un exemple de réalisation donné à titre illustratif, l'état du convoi C est représenté numériquement à chaque instant par un état noté Xₜ, contenant un ensemble de vecteurs de position P_{i,t}, un ensemble de vecteurs d'odométrie Oi,t, voire en outre un ensemble de vecteurs d'accélération A_{i,t}, bien que cela ne soit pas toujours indispensable.

Par exemple, chaque vecteur de position P_{i,t} exprime la position d'un véhicule du convoi C à l'instant correspondant (par exemple, la position du i-ième véhicule du convoi à l'instant t). Par exemple, la position du véhicule est exprimée par des coordonnées cartésiennes et par un angle d'orientation. Chaque vecteur d'odométrie O_{i,t} exprime la vitesse du véhicule et l'angle des roues directrices du véhicule.

En outre, l'état Xₜ peut comporter un ensemble de vecteurs de consigne U_{i,t} exprimant, pour chaque véhicule du convoi, les consignes envoyées à l'interface 24 pour piloter le véhicule.

L'état Xₜ du convoi peut alors être estimé séquentiellement pour différents instants du temps, notamment pour des instants futurs, au fur et à mesure de la répétition des étapes ici décrites, au moyen d'un estimateur spécifiquement construit.

Par exemple, l'estimateur permet de calculer l'espérance conditionnelle de l'état Xₜ du convoi à l'instant t en connaissant l'ensemble des mesures de position et d'odométrie considérées pour les instants précédents. Par exemple, on utilise un estimateur qui minimise l'erreur quadratique.

L'évolution de l'état Xₜ au cours du temps est par exemple représentée par une fonction d'état qui représente l'évolution de l'état au cours du temps, notamment en fonction des états passés, et une fonction de mesure qui relie l'état que l'on cherche à estimer avec les mesures réalisées pour l'instant correspondant.

Pour chaque itération, pour estimer l'état à l'instant suivant t+1, un estimateur est d'abord recalculé au moyen de l'équation d'état mais sans tenir compte des mesures nouvellement réalisées pour cet instant t+1 (étape dite de propagation), puis l'estimateur est mis à jour avec les mesures réalisées pour cet instant t+1.

Selon des exemples, pour simplifier certaines étapes de calcul, le comportement cinématique et dynamique du véhicule 10 peut être modélisé par un modèle physique simplifié spécialement choisi. Par exemple, on peut utiliser le modèle dit de la bicyclette, dans lequel le véhicule 10 est approximativement assimilé, du point de vue de son comportement dynamique, comme un véhicule à deux roues se déplaçant sur une surface plane.

En variante, d'autres implémentations sont toutefois possibles.

Ensuite, lors d'une étape 108, une trajectoire cible est calculée automatiquement, ici par l'unité électronique 12 du véhicule suiveur, en fonction des données de trajectoire acquises et des données de position relative mesurées par ledit véhicule. Selon des variantes, la trajectoire cible est calculée lors de cette étape en prenant également en compte les positions instantanées acquises ou déterminées lors de ladite étape.

Selon des modes de réalisation, la trajectoire cible T est calculée par interpolation à partir des positions connues des véhicules du convoi C.

La trajectoire cible, ici illustrée par la référence T sur la figure 1, est de préférence exprimée dans le repère R propre au véhicule suiveur en question.

Selon des implémentations préférées, l'étape 108 est ici mise en oeuvre par chacun des véhicules suiveurs, de manière à ce que chacun de ces véhicules suiveurs calcule sa propre trajectoire cible T à suivre. Cela permet de conférer une meilleure fiabilité et robustesse du procédé de guidage, puisque le guidage de chaque véhicule suiveur est piloté indépendamment.

Cependant, selon des variantes, l'étape 108 peut être exécutée de façon centralisée, par exemple par l'unité de traitement 12 d'un seul des véhicules suiveurs 10, voire par une unité électronique de traitement différente des unités de traitement 12 et appartenant au convoi C ou étant extérieure au convoi C.

Une fois la trajectoire cible calculée, ledit véhicule est commandé pour suivre la trajectoire cible T calculée. Cette commande est ici assurée par l'unité de commande 12.

Selon des exemples, la commande du véhicule 10 comporte d'abord une étape 110 de calcul de valeurs de commande à partir de la trajectoire cible calculée, puis une étape 112 d'application des valeurs de commande calculées sur un ou plusieurs des actionneurs 26, 28, 30 du véhicule pour piloter ce véhicule afin qu'il suive la trajectoire cible T.

Comme expliqué précédemment, cette application des valeurs de commande peut être faite au travers de l'interface 24.

Selon des exemples, le calcul des valeurs de commande comporte le calcul de valeurs de commande d'accélération pour ledit véhicule en fonction d'une loi de contrôle longitudinal et en fonction de la trajectoire cible.

Selon d'autres exemples, le calcul des valeurs de commande comporte le calcul de valeurs de commande d'angle de braquage en fonction d'une loi de contrôle latéral et en fonction de la trajectoire cible.

A titre d'exemple, le contrôle longitudinal peut être défini comme une ou plusieurs lois de commande visant à adapter le déplacement du véhicule suiveur longitudinalement par rapport à la trajectoire cible T calculée, notamment pour adapter l'accélération, et/ou la vitesse et/ou le freinage d'un véhicule suiveur pour contrôler son déplacement et sa position le long de la trajectoire cible T, par exemple pour respecter une valeur de consigne de distance par rapport aux autres véhicules du convoi C.

Ce contrôle longitudinal peut être effectué en adaptant les valeurs de couple moteur et/ou de couple de freinage et/ou de pression de frein appliquée pour le véhicule suiveur au moyen des actionneurs définis ci-dessus.

Le contrôle latéral peut être défini comme une ou plusieurs lois de commande visant à adapter le déplacement du véhicule suiveur latéralement par rapport à la trajectoire cible T calculée, notamment pour adapter l'angle de braquage des roues du véhicule suiveur, afin que celui-ci soit bien positionné sur la trajectoire cible T calculée.

Ce contrôle latéral peut être effectué en adaptant, pour le véhicule suiveur, les valeurs d'angle de braquage des roues directrices et/ou d'angle au volant appliqué et/ou de pression de frein appliquée au moyen des actionneurs définis ci-dessus.

Grâce à l'invention, la trajectoire cible que doit suivre chaque véhicule suiveur est calculée en fonction des données de trajectoire du véhicule guide et de la connaissance de la position relative d'au moins une partie des autres véhicules autonomes du convoi d'autre part. Cela réduit le risque d'erreur de trajectoire du véhicule suiveur.

Les véhicules suiveurs 10 du convoi C peuvent donc suivre le véhicule de tête VG de façon autonome, en conservant leur position au sein du convoi, sans nécessiter de supervision constante d'un opérateur de conduite.

En tenant compte de la trajectoire du véhicule guide VG, le guidage des véhicules suiveurs VS1 à VS7 est plus précis que dans le cas où la trajectoire de chaque véhicule suiveur serait calculée seulement à partir de la position du véhicule qui le précède, car dans ce cas d'éventuelles erreurs de position se propageraient de proche en proche dans tout le convoi et seraient amplifiées au point que la dérive en position du véhicule situé en queue de convoi serait beaucoup trop importante.

En variante, la commande du véhicule peut en outre inclure le pilotage d'équipements auxiliaires du véhicule, notamment dans le but de faciliter le suivi de la trajectoire cible calculée. Par exemple, le pilotage d'équipements auxiliaires du véhicule peut inclure l'allumage ou l'extinction de phares ou de clignotants du véhicule, ou encore le blocage ou le déblocage d'un différentiel du véhicule.

Les modes de réalisation et les variantes envisagés ci-dessus peuvent être combinés entre eux pour donner naissance à de nouveaux modes de réalisation.

## Revendications

1. Procédé de guidage pour un convoi (C) de véhicules comprenant un véhicule guide (VG) étant en tête du convoi et une pluralité de véhicules suiveurs (VS1, VS2, VS3, VS4, VS5, VS6, VS7), le procédé de guidage visant à assurer le guidage de chacun des véhicules suiveurs (VS1, VS2, VS3, VS4, VS5, VS6, VS7), chaque véhicule suiveur étant un véhicule autonome, le procédé de guidage comportant, pour chaque véhicule autonome, des étapes consistant à :
- acquérir (104), par le véhicule autonome (VS1, VS2, VS3, VS4, VS5, VS6, VS7), des données de trajectoire du véhicule guide (VG) ;
- mesurer (106), par des capteurs (16) du véhicule autonome, des données de position relative du véhicule autonome (VS1, VS2, VS3, VS4, VS5, VS6, VS7) par rapport à au moins un des autres véhicules du convoi précédant le véhicule autonome, ledit au moins un des autres véhicules du convoi comprenant le véhicule du convoi (C) qui précède immédiatement le véhicule autonome, ce véhicule du convoi étant soit le véhicule guide soit l'un des véhicules suiveurs ;
- acquérir les positions instantanées d'au moins une partie des véhicules suiveurs du convoi (C), par exemple en fonction des données de position relative mesurées par le véhicule autonome et des données de trajectoire acquises du véhicule guide ;
- calculer (108), par une unité électronique de traitement (12), une trajectoire cible (T) en fonction :
• des données de trajectoire acquises et des données de position relative mesurées par ledit véhicule autonome, et
• des positions instantanées acquises ;
- commander (110, 112) le véhicule autonome (VS1, VS2, VS3, VS4, VS5, VS6, VS7) pour suivre la trajectoire cible calculée,
et dans lequel commander le véhicule autonome (VS1, VS2, VS3, VS4, VS5, VS6, VS7) pour suivre la trajectoire calculée pour ce véhicule autonome comporte :
- calculer (110) des valeurs de commande à partir de la trajectoire cible calculée, ce calcul comportant, pour le véhicule autonome (VS1, VS2, VS3, VS4, VS5, VS6, VS7), le calcul de valeurs de commande d'accélération en fonction d'une loi de contrôle longitudinal et en fonction de la trajectoire cible et le calcul de valeurs de commande d'angle de braquage en fonction d'une loi de contrôle latéral et en fonction de la trajectoire cible ;
- appliquer (112) les valeurs de commande calculées sur un ou plusieurs actionneurs (26, 28, 30) du véhicule autonome pour piloter le véhicule autonome.

2. Procédé selon la revendication 1, dans lequel les données de position relative du véhicule autonome (VS1, VS2, VS3, VS4, VS5, VS6, VS7) sont mesurées (106) par rapport à chacun des véhicules du convoi (C) qui précèdent le véhicule autonome.

3. Procédé selon l'une quelconque des revendications précédentes, dans lequel le procédé comporte en outre l'acquisition (104) de données de position relatives additionnelles mesurées par d'autres véhicules du convoi (C), les positions instantanées des véhicules du convoi étant déterminé en fonction également des données de position relatives additionnelles.

4. Procédé selon l'une quelconque des revendications précédentes, dans lequel les données de trajectoire du véhicule guide (VG) sont acquises au travers d'une liaison de communication établie entre le véhicule autonome (VS1, VS2, VS3, VS4, VS5, VS6, VS7) et le véhicule guide (VG).

5. Procédé de guidage d'un convoi (C) de véhicules, le convoi comportant un véhicule guide (VG) et une pluralité de véhicules autonomes (VS1, VS2, VS3, VS4, VS5, VS6, VS7) suivant le véhicule guide, ce procédé comportant des étapes consistant à :
- calculer (100), par le véhicule guide (VG), une valeur courante de sa trajectoire en fonction de valeurs passées de sa trajectoire et de données d'odométrie mesurées par un ensemble de capteurs (16) du véhicule guide ;
- envoyer (102), par le véhicule guide (VG), à destination des véhicules autonomes (VS1, VS2, VS3, VS4, VS5, VS6, VS7) du convoi, des données de trajectoire contenant notamment la valeur courante calculée de sa trajectoire ;
- mettre en oeuvre, par chaque véhicule autonome (VS1, VS2, VS3, VS4, VS5, VS6, VS7) du convoi suivant le véhicule guide, d'un procédé de guidage conforme à l'une quelconque des revendications précédentes, en fonction des données de trajectoire envoyées par le véhicule guide (VG).

6. Véhicule autonome (VS1, VS2, VS3, VS4, VS5, VS6, VS7) comportant des capteurs (16) et une unité électronique de traitement (12), **caractérisé en ce que** l'unité électronique de traitement est programmée pour, lorsque le véhicule autonome fait partie d'un convoi (C) comportant un véhicule guide (VG) et au moins un autre véhicule autonome, mettre en oeuvre des étapes consistant à :
- acquérir (104) des données de trajectoire du véhicule guide (VG) du convoi, le véhicule guide (VG) étant en tête du convoi (C) ;
- mesurer (106), par les capteurs (16) dudit véhicule autonome (VS1, VS2, VS3, VS4, VS5, VS6, VS7), des données de position relative dudit véhicule par rapport à au moins un des autres véhicules du convoi précédant ledit véhicule autonome, ledit au moins un des autres véhicules du convoi comprenant le véhicule du convoi qui précède immédiatement le véhicule autonome ;
acquérir les positions instantanées d'au moins une partie des véhicules suiveurs du convoi (C), par exemple en fonction des données de position relative mesurées par ledit véhicule autonome et des données de trajectoire acquises du véhicule guide ;
- calculer (108) une trajectoire cible (T) en fonction des données de trajectoire acquises, des données de position relative mesurées par ledit véhicule autonome et des positions instantanées acquises ;
- commander (110, 112) le véhicule autonome (VS1, VS2, VS3, VS4, VS5, VS6, VS7) pour suivre la trajectoire cible calculée,
et dans lequel commander le véhicule autonome (VS1, VS2, VS3, VS4, VS5, VS6, VS7) pour suivre la trajectoire calculée pour ce véhicule autonome comporte :
- calculer (110) des valeurs de commande à partir de la trajectoire cible calculée, ce calcul comportant, pour le véhicule autonome (VS1, VS2, VS3, VS4, VS5, VS6, VS7), le calcul de valeurs de commande d'accélération en fonction d'une loi de contrôle longitudinal et en fonction de la trajectoire cible et le calcul de valeurs de commande d'angle de braquage en fonction d'une loi de contrôle latéral et en fonction de la trajectoire cible ;
- appliquer (112) les valeurs de commande calculées sur un ou plusieurs actionneurs (26, 28, 30) du véhicule autonome pour piloter le véhicule autonome.

7. Convoi (C) de véhicules comportant un véhicule guide (VG) et une pluralité de véhicules autonomes (VS1, VS2, VS3, VS4, VS5, VS6, VS7) programmés pour suivre le véhicule guide, **caractérisé en ce que** le véhicule guide (VG) est programmé pour mettre en oeuvre des étapes consistant à :
- calculer (100) une valeur courante de sa trajectoire en fonction de valeurs passées de sa trajectoire et de données d'odométrie mesurées par un deuxième ensemble de capteurs du véhicule guide ;
- envoyer (102) la valeur courante calculée de sa trajectoire à destination des véhicules autonomes du convoi, par l'intermédiaire d'une liaison de communication ;
et **en ce que** chacun des véhicules autonomes (VS1, VS2, VS3, VS4, VS5, VS6, VS7) est conforme à la revendication 6.

## Patentansprüche

1. Führungsverfahren für einen Konvoi (C) von Fahrzeugen, umfassend ein Führungsfahrzeug (VG), das den Konvoi anführt, und eine Vielzahl von Folgefahrzeugen (VS1, VS2, VS3, VS4, VS5, VS6, VS7), wobei das Führungsverfahren dazu dient, die Führung von jedem der nachfolgenden Fahrzeuge (VS1, VS2, VS3, VS4, VS5, VS6, VS7) zu gewährleisten, wobei jedes nachfolgende Fahrzeug ein autonomes Fahrzeug ist, das Führungsverfahren umfassend für jedes autonome Fahrzeug Schritte, die aus Folgendem bestehen:
- Erfassen (104), durch das autonome Fahrzeug (VS1, VS2, VS3, VS4, VS5, VS6, VS7), von Bahndaten des Führungsfahrzeugs (VG);
- Messen (106), durch Sensoren (16) des autonomen Fahrzeugs, von relativen Positionsdaten des autonomen Fahrzeugs (VS1, VS2, VS3, VS4, VS5, VS6, VS7) in Bezug auf mindestens eines der anderen Fahrzeuge des Konvois vor dem autonomen Fahrzeug, wobei das mindestens eine der anderen Fahrzeuge des Konvois das Fahrzeug des Konvois (C) umfasst, das dem autonomen Fahrzeug unmittelbar vorausgeht, wobei dieses Fahrzeug des Konvois entweder das Führungsfahrzeug oder eines der nachfolgenden Fahrzeuge ist;
- Erfassen der momentanen Positionen von mindestens einem Teil der Folgefahrzeuge des Konvois (C), beispielsweise abhängig von relativen Positionsdaten, die von dem autonomen Fahrzeug gemessen werden, und den Bahndaten, die von dem Führungsfahrzeug erfasst werden;
- Berechnen (108), durch eine elektronische Verarbeitungseinheit (12), einer Zielbahn (T) abhängig von:
• erfassten Bahndaten und relative Positionsdaten, die von dem autonomen Fahrzeug gemessen werden, und
• erfassten momentanen Positionen;
- Steuern (110, 112) des autonomen Fahrzeugs (VS1, VS2, VS3, VS4, VS5, VS6, VS7), um der berechneten Zielbahn zu folgen,
und wobei das Steuern des autonomen Fahrzeugs (VS1, VS2, VS3, VS4, VS5, VS6, VS7), um der für dieses autonome Fahrzeug berechneten Bahn zu folgen, Folgendes umfasst:
- Berechnen (110) von Steuerwerten anhand der berechneten Zielbahn, wobei dieses Berechnen für das autonome Fahrzeug (VS1, VS2, VS3, VS4, VS5, VS6, VS7) das Berechnen von Beschleunigungssteuerwerten abhängig von einem Längssteuergesetz und abhängig von der Zielbahn und das Berechnen von Lenkwinkelsteuerwerten abhängig von einem Seitensteuergesetz und abhängig von der Zielbahn umfasst;
- Anwenden (112) der berechneten Steuerwerte auf einen oder mehrere Aktuatoren (26, 28, 30) des autonomen Fahrzeugs, um das autonome Fahrzeug zu steuern.

2. Verfahren nach Anspruch 1, wobei die relativen Positionsdaten des autonomen Fahrzeugs (VS1, VS2, VS3, VS4, VS5, VS6, VS7) in Bezug auf jedes der Fahrzeuge des Konvois (C) gemessen werden (106), die vor dem autonomen Fahrzeug fahren.

3. Verfahren nach einem der vorherigen Ansprüche, wobei das Verfahren ferner das Erfassen (104) zusätzlicher relativer Positionsdaten umfasst, die von anderen Fahrzeugen des Konvois (C) gemessen werden, wobei die momentanen Positionen der Fahrzeuge des Konvois auch basierend auf den zusätzlichen relativen Positionsdaten bestimmt werden.

4. Verfahren nach einem der vorherigen Ansprüche, wobei die Bahndaten des Führungsfahrzeugs (VG) über eine Kommunikationsverbindung erfasst werden, die zwischen dem autonomen Fahrzeug (VS1, VS2, VS3, VS4, VS5, VS6, VS7) und dem Führungsfahrzeug (VG) aufgebaut wird.

5. Verfahren zum Führen eines Konvois (C) von Fahrzeugen, der Konvoi umfassend ein Führungsfahrzeug (VG) und eine Vielzahl von autonomen Fahrzeugen (VS1, VS2, VS3, VS4, VS5, VS6, VS7), die dem Führungsfahrzeug folgen, dieses Verfahren umfassend Schritte, die aus Folgendem bestehen:
- Berechnen (100), durch das Führungsfahrzeug (VG), eines aktuellen Werts seiner Bahn als Funktion vergangener Werte seiner Bahn und von Odometriedaten, die durch einen Satz von Sensoren (16) des Führungsfahrzeugs gemessen werden;
- Senden (102), durch das Führungsfahrzeug (VG) an die autonomen Fahrzeuge (VS1, VS2, VS3, VS4, VS5, VS6, VS7) des Konvois, von Bahndaten, die insbesondere den berechneten aktuellen Wert seiner Bahn enthalten;
- Umsetzen, durch jedes autonome Fahrzeug (VS1, VS2, VS3, VS4, VS5, VS6, VS7) des Konvois, der dem Führungsfahrzeug folgt, eines Führungsverfahrens nach einem der vorherigen Ansprüche, abhängig von den Bahndaten, die von dem Führungsfahrzeug (VG) gesendet werden.

6. Autonomes Fahrzeug (VS1, VS2, VS3, VS4, VS5, VS6, VS7), umfassend Sensoren (16) und eine elektronische Verarbeitungseinheit (12), **dadurch gekennzeichnet, dass** die elektronische Verarbeitungseinheit programmiert ist, um, wenn das autonome Fahrzeug Teil eines Konvois (C) umfassend ein Führungsfahrzeug (VG) und mindestens ein anderes autonomes Fahrzeug ist, Schritte durchzuführen, die aus Folgendarin bestehen:
- Erfassen (104) von Bahndaten des Führungsfahrzeugs (VG) des Konvois, wobei das Führungsfahrzeug (VG) an der Spitze des Konvois (C) ist;
- Messen (106), durch die Sensoren (16) des autonomen Fahrzeugs (VS1, VS2, VS3, VS4, VS5, VS6, VS7), von relativen Positionsdaten des Fahrzeugs in Bezug auf mindestens eines der anderen Fahrzeuge des Konvois vor dem autonomen Fahrzeug, wobei das mindestens eine der anderen Fahrzeuge des Konvois das Fahrzeug des Konvois umfasst, das dem autonomen Fahrzeug unmittelbar vorausgeht;
- Erfassen der momentanen Positionen von mindestens einem Teil der Folgefahrzeuge des Konvois (C), beispielsweise abhängig von relativen Positionsdaten, die von dem autonomen Fahrzeug gemessen werden, und den Bahndaten, die von dem Führungsfahrzeugs erfasst werden;
- Berechnen (108) einer Zielbahn (T) abhängig von erfassten Bahndaten, den von dem autonomen Fahrzeug gemessenen relativen Positionsdaten und den erfassten momentanen Positionen;
- Steuern (110, 112) des autonomen Fahrzeugs (VS1, VS2, VS3, VS4, VS5, VS6, VS7), um der berechneten Zielbahn zu folgen,
und wobei das Steuern des autonomen Fahrzeugs (VS1, VS2, VS3, VS4, VS5, VS6, VS7), um der für dieses autonome Fahrzeug berechneten Bahn zu folgen, Folgendes umfasst:
- Berechnen (110) von Steuerwerten anhand der berechneten Zielbahn, wobei dieses Berechnen für das autonome Fahrzeug (VS1, VS2, VS3, VS4, VS5, VS6, VS7) das Berechnen von Beschleunigungssteuerwerten abhängig von einem Längssteuergesetz und abhängig von der Zielbahn und das Berechnen von Lenkwinkelsteuerwerten abhängig von einem Seitensteuergesetz und abhängig von der Zielbahn umfasst;
- Anwenden (112) der berechneten Steuerwerte auf einen oder mehrere Aktuatoren (26, 28, 30) des autonomen Fahrzeugs, um das autonome Fahrzeug zu steuern.

7. Konvoi (C) von Fahrzeugen, umfassend ein Führungsfahrzeug (VG) und eine Vielzahl von autonomen Fahrzeugen (VS1, VS2, VS3, VS4, VS5, VS6, VS7), die programmiert sind, um dem Führungsfahrzeug zu folgen, **dadurch gekennzeichnet, dass** das Führungsfahrzeug (VG) programmiert ist, um Schritte durchzuführen, die aus Folgendem bestehen:
- Berechnen (100) eines aktuellen Werts seiner Bahn abhängig von vergangenen Werten seiner Bahn und von Odometriedaten, die von einem zweiten Satz von Sensoren des Führungsfahrzeugs gemessen werden;
- Senden (102) des berechneten aktuellen Werts seiner Bahn an die autonomen Fahrzeuge des Konvois über eine Kommunikationsverbindung;
und dass jedes der autonomen Fahrzeuge (VS1, VS2, VS3, VS4, VS5, VS6, VS7) dem Anspruch 6 entspricht.

## Claims

1. A guidance method for a convoy (C) of vehicles comprising a guide vehicle (VG) at the head of the convoy and a plurality of follower vehicles (VS1, VS2, VS3, VS4, VS5, VS6, VS7), the guidance method aiming to guide each of the follower vehicles (VS1, VS2, VS3, VS4, VS5, VS6, VS7), each follower vehicle being an autonomous vehicle, the guidance method comprising, for each autonomous vehicle, steps consisting of:
- acquiring (104), by the autonomous vehicle (VS1, VS2, VS3, VS4, VS5, VS6, VS7), trajectory data from the guide vehicle (VG);
- measuring (106), by sensors (16) of the autonomous vehicle, data on the relative position of the autonomous vehicle (VS1, VS2, VS3, VS4, VS5, VS6, VS7) with respect to at least one of the other vehicles of the convoy preceding the autonomous vehicle, said at least one of the other vehicles of the convoy comprising the vehicle of the convoy (C) which immediately precedes the autonomous vehicle, this vehicle of the convoy being either the guide vehicle or one of the follower vehicles;
- acquiring the instantaneous positions of at least some of the follower vehicles in the convoy (C), for example as a function of the relative position data measured by the autonomous vehicle and the trajectory data acquired from the guide vehicle;
- calculating (108), by an electronic processing unit (12), a target trajectory (T) as a function of:
• the trajectory data acquired and relative position data measured by said autonomous vehicle, and
• the instantaneous positions acquired;
- commanding (110, 112) the autonomous vehicle (VS1, VS2, VS3, VS4, VS5, VS6, VS7) to follow the calculated target trajectory,
and wherein commanding the autonomous vehicle (VS1, VS2, VS3, VS4, VS5, VS6, VS7) to follow the trajectory calculated for that autonomous vehicle comprises:
- calculating (110) command values from the calculated target trajectory, this calculation comprising, for the autonomous vehicle (VS1, VS2, VS3, VS4, VS5, VS6, VS7), the calculation of acceleration command values as a function of a longitudinal control law and as a function of the target trajectory, and the calculation of steering angle command values as a function of a lateral control law and as a function of the target trajectory;
- applying (112) the calculated command values to one or more actuators (26, 28, 30) of the autonomous vehicle to control the autonomous vehicle.

2. The method according to claim 1, wherein the relative position data of the autonomous vehicle (VS1, VS2, VS3, VS4, VS5, VS6, VS7) is measured (106) with respect to each of the vehicles in the convoy (C) that precede the autonomous vehicle.

3. The method according to any one of the preceding claims, wherein the method further comprises the acquisition (104) of additional relative position data measured by other vehicles of the convoy (C), the instantaneous positions of the vehicles of the convoy being determined as a function also of the additional relative position data.

4. The method according to any one of the preceding claims, wherein the trajectory data of the guide vehicle (VG) is acquired via a communication link established between the autonomous vehicle (VS1, VS2, VS3, VS4, VS5, VS6, VS7) and the guide vehicle (VG).

5. The guidance method for a convoy (C) of vehicles, the convoy comprising a guide vehicle (VG) and a plurality of autonomous vehicles (VS1, VS2, VS3, VS4, VS5, VS6, VS7) following the guide vehicle, the method comprising the steps consisting of:
- calculating (100), by the guide vehicle (VG), a current value of its trajectory as a function of past values of its trajectory and odometry data measured by a set of sensors (16) of the guide vehicle;
- sending (102), by the guide vehicle (VG), to the autonomous vehicles (VS1, VS2, VS3, VS4, VS5, VS6, VS7) of the convoy, trajectory data containing in particular the calculated current value of its trajectory;
- implementing, by each autonomous vehicle (VS1, VS2, VS3, VS4, VS5, VS6, VS7) in the convoy following the guide vehicle, a guidance method in accordance with any one of the preceding claims, as a function of the trajectory data sent by the guide vehicle (VG).

6. An autonomous vehicle (VS1, VS2, VS3, VS4, VS5, VS6, VS7) comprising sensors (16) and an electronic processing unit (12), **characterised in that** the electronic processing unit is programmed to, when the autonomous vehicle is part of a convoy (C) comprising a guide vehicle (VG) and at least one other autonomous vehicle, implement steps consisting of:
- acquiring (104) trajectory data from the guide vehicle (VG) of the convoy, the guide vehicle (VG) being at the head of the convoy (C);
- measuring (106), by the sensors (16) of said autonomous vehicle (VS1, VS2, VS3, VS4, VS5, VS6, VS7), data on the relative position of said vehicle with respect to at least one of the other vehicles in the convoy preceding said autonomous vehicle, said at least one of the other vehicles in the convoy comprising the vehicle in the convoy immediately preceding the autonomous vehicle;
- acquiring the instantaneous positions of at least some of the follower vehicles in the convoy (C), for example as a function of the relative position data measured by said autonomous vehicle and the trajectory data acquired from the guide vehicle;
- calculating (108) a target trajectory (T) as a function of the acquired trajectory data, the relative position data measured by said autonomous vehicle, and the instantaneous positions acquired;
- commanding (110, 112) the autonomous vehicle (VS1, VS2, VS3, VS4, VS5, VS6, VS7) to follow the calculated target trajectory,
and wherein commanding the autonomous vehicle (VS1, VS2, VS3, VS4, VS5, VS6, VS7) to follow the trajectory calculated for that autonomous vehicle comprises:
- calculating (110) command values from the calculated target trajectory, this calculation comprising, for the autonomous vehicle (VS1, VS2, VS3, VS4, VS5, VS6, VS7), the calculation of acceleration command values as a function of a longitudinal control law and as a function of the target trajectory, and the calculation of steering angle command values as a function of a lateral control law and as a function of the target trajectory;
- applying (112) the calculated command values to one or more actuators (26, 28, 30) of the autonomous vehicle to control the autonomous vehicle.

7. A convoy (C) of vehicles comprising a guide vehicle (VG) and a plurality of autonomous vehicles (VS1, VS2, VS3, VS4, VS5, VS6, VS7) programmed to follow the guide vehicle, **characterised in that** the guide vehicle (VG) is programmed to implement steps consisting of:
- calculating (100) a current value of its trajectory as a function of past values of its trajectory and odometry data measured by a second set of sensors of the guide vehicle;
- sending (102) the current calculated value of its trajectory to the autonomous vehicles in the convoy, via a communication link;
and **in that** each of the autonomous vehicles (VS1, VS2, VS3, VS4, VS5, VS6, VS7) is in accordance with claim 6.
